# EUROPEAN PATENT APPLICATION

(11) **EP 2 515 270 A1**
(43) Date of publication of application: **24.10.2012**
(21) Application number: 12160614.9
(22) Date of filing: 21.03.2012
(51) Int. Cl.: G06Q 30/02

(54) **Method and system for providing location targeted advertisements**

(30) Priority: 20.04.2011 US 201113090564
(71) Applicant: Navteq North America, LLC, Chicago, Illinois 60606 (US)
(72) Inventor: Shutter, Jon D., Chicago, IL 60611 (US)
(74) Representative: Pelly, Jason Charles

(57) **Abstract**

A method of providing advertisements to mobile devices is disclosed. A position of a first mobile device is obtained and one of the advertisements from an advertisement database is identified based on the position of the first mobile device. At least one friend of a first user of the first mobile device is identified, wherein the friend is associated with a second mobile device. The identified advertisement is provided to the first mobile device and the second mobile device, wherein the advertisement includes an incentive for both a first user of the first mobile device and a user of the second mobile device to visit together a point of interest associated with the identified advertisement.

## Description

### BACKGROUND OF THE INVENTION

The present invention relates to a method and system for providing advertisements, and more particularly to a method and system for providing location targeted and group targeted advertisements to mobile devices.

Persons who travel through a geographic region can use different types of mobile or portable computing platforms to obtain various geographically-related features and services. Mobile or portable computing platforms that provide geographically-related features and services include dedicated computing devices and general purpose computing devices. Dedicated computing devices include in-vehicle navigation systems and personal (i.e., portable or hand-held) navigation systems. General purpose computing devices include devices, such as mobile telephones, portable personal computers (e.g., notebook computers, tablets) and personal digital assistants (e.g., PDAs).

Some of the various geographically-related features and services provided by the different types of mobile or portable computing platforms include route calculation and guidance. For example, some mobile or portable computing platforms are able to provide users with an optimum route to travel by roads between locations in a geographic region. Using input from an end user, and optionally from equipment that can determine the end user's physical location (such as a GPS system), a navigation application program used by a mobile or portable computing platform system examines various paths between two locations to determine an optimum route to travel from a starting location to a destination location in the geographic region. The user of the mobile or portable computing platform is then provided with information about the optimum route in the form of instructions that identify the maneuvers required to be taken by the end user to travel from the starting location to the destination location.

Another geographically-related feature provided by some mobile or portable computing platforms is business or person finding services (e.g., electronic yellow or white pages). These services can identify addresses of individuals or businesses. These services can also identify for a user which businesses of a certain type (e.g., Chinese restaurants) are located within a given range (e.g., 3 miles) of a given location.

Although present mobile or portable computing platforms that provide geographically-related features and services are able to provide many useful advantages, there continues to be room for improvement. One area in which there is room for improvement relates to providing information to end users based upon their location. Some types of information, such as advertising, can be more effective or useful if it is restricted to only certain specific locations. For example, a gas station located in Chicago would not advertise to users located in Miami.

Accordingly, it is an objective to deliver advertising to end users who are traveling in a geographic region. One area in which there is room for improvement relates to creating and providing advertisements to the end user of the mobile or portable computing platforms. It would be beneficial to both the advertiser and the users to provide advertisements that are tailored for the users and encourage action by the users.

### SUMMARY OF THE INVENTION

To address these and other objectives, the present invention comprises a method for providing advertisements to mobile devices. The method obtains a position of a first mobile device and obtains one of the advertisements from an advertisement database based on the position of the first mobile device. At least one friend of a first user of the first mobile device is identified, wherein the friend is associated with a second mobile device. The method provides the advertisement to the first mobile device and to the second mobile device, wherein the advertisement includes an incentive for both a first user of the first mobile device and a user of the second mobile device to visit together a point of interest associated with the identified advertisement.

According to another aspect, the present invention comprises a system for providing an advertisement. The system comprises a processor, an advertisement database associated with the processor, and an advertising program executed on the processor. The advertising program obtains a position of a first mobile device and identifies a second mobile device of a friend of the first mobile device that is located proximate the position of the first mobile device. The advertising program provides an advertisement from the advertisement database to the first mobile device and the second mobile device. The advertisement includes an incentive for both a first user of the first mobile device and a second user of the second mobile device to visit together a point of interest associated with the advertisement.

According to an aspect of the invention, there is provided a computer implemented method of providing advertisements, the method comprising: obtaining a position of a first mobile device; identifying one of the advertisements from an advertisement database based on the position of the first mobile device; identifying at least one friend of a first user of the first mobile device, wherein the friend is associated with a second mobile device; obtaining a position of the second mobile device, wherein the position of the second mobile device is proximate the position of the first mobile device; providing the identified advertisement to the first mobile device and the second mobile device, wherein the advertisement includes an incentive for both a first user of the first mobile device and a user of the second mobile device to visit together a point of interest associated with the identified advertisement.

In some embodiments, the incentive is a coupon.

In some embodiments, the friend of the first user is obtained from user information.

In some embodiments, the friend of the first user is obtained from a contacts list associated with the first mobile device.

In some embodiments, the friend of the first user is obtained using interest information of the first user.

In some embodiments, the method further comprises: obtaining a response from the first mobile device representing acceptance or denial of the advertisement. The method may then further comprise: providing the response from the first mobile device to the second mobile device.

According to an aspect of the invention, there is provided a system for providing an advertisement comprising: a processor, an advertisement database associated with the processor, and an advertising program executed on the processor, wherein the advertising program obtains a position of a first mobile device, identifies a second mobile device of a friend of the first mobile device that is located proximate the position of the first mobile device and provides an advertisement from the advertisement database to the first mobile device and the second mobile device, wherein the advertisement includes an incentive for both a first user of the first mobile device and a second user of the second mobile device to visit together a point of interest associated with the advertisement.

In some embodiments, the advertising program obtains demographics information of the first user and the user of the second mobile device.

In some embodiments, the advertising program obtains interest information of the first user and the user of the second mobile device.

In some embodiments, the user of the second mobile device is a friend of the first user.

In some embodiments, the user of the second mobile device has similar interests as the first user.

In some embodiments, the incentive is a coupon.

In some embodiments, the advertising program obtains a response from the first mobile device representing acceptance or denial of the advertisement and provides the response to the second mobile device.

According to an aspect of the invention, there is provided a method of operating a computer platform to provide advertising messages, the method comprising: obtaining data representing a specified geographic area for an advertisement from an advertisement database; identifying a first mobile device that is located within the specified area for the advertisement; identifying a second mobile device of a friend of a first user of the first mobile device that is located within the specified area for the advertisement; providing the advertisement to the first mobile device and the second mobile device, wherein the advertisement includes an incentive for both a first user and the friend to visit together a point of interest associated with the identified advertisement.

In some embodiments, the advertisement is intended for users having a specified interest and the first user and the friend have the specified interest.

In some embodiments, the advertisement is intended for users having a specified demographic characteristic and the first user and the friend have the specified demographic characteristic.

In some embodiments, the method further comprises: obtaining a response from the first mobile device representing acceptance or denial of the advertisement.

In some embodiments, the method further comprises: providing the response from the first mobile device to the second mobile device.

In some embodiments, the incentive is a coupon.

### BRIEF DESCRIPTION OF THE DRAWINGS

An exemplary embodiment of the present invention is described herein with reference to the following drawings.
Figure 1 illustrates an embodiment of a system for providing advertising messages in a geographic region.
Figure 2 illustrates a more detailed view of an advertising provider of the system for providing advertising messages in a geographic region.
Figure 3 illustrates a more detailed view of a mobile device of the system for providing advertising messages in a geographic region.
Figure 4 is a block diagram of an advertisement database.
Figure 5 is a block diagram of a user information database.
Figure 6 is a flow chart for providing advertising messages.
Figure 7 illustrates a map of a geographic region that depicts the location of three mobile devices and a point of interest, according to an example embodiment.

### DETAILED DESCRIPTION OF THE

### PRESENTLY PREFERRED EMBODIMENTS

### I. Advertisement System Overview

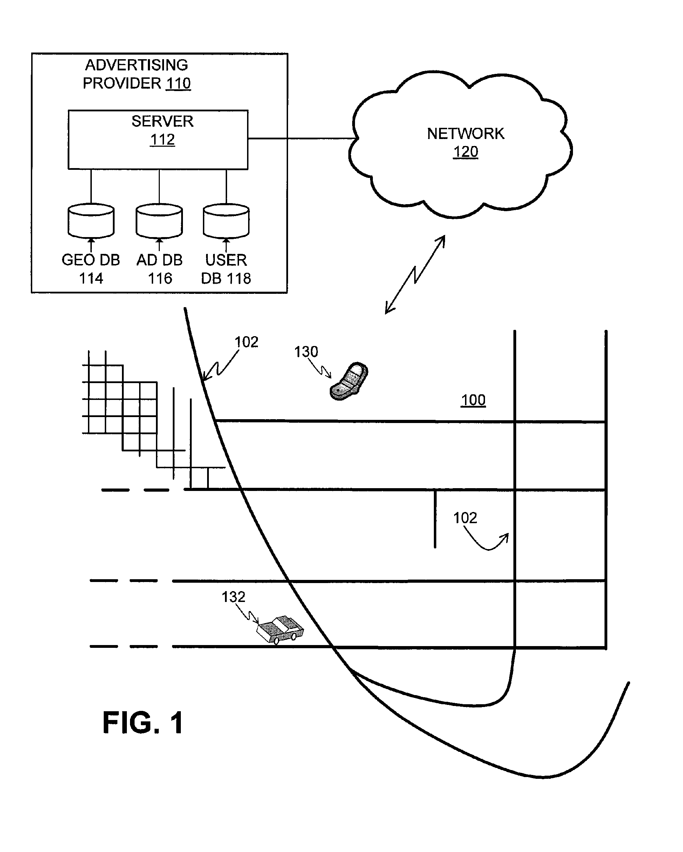

Figure 1 is a diagram illustrating a region 100. The region 100 may be a metropolitan area, such as the New York metropolitan area, the Los Angeles metropolitan area, or any other metropolitan area. Alternatively, the region 100 may be a state, province, or country, such as California, Illinois, France, England, or Germany. Alternatively, the geographic region 100 can be a combination of one or more metropolitan areas, states, countries, and so on. Located in the region 100 are a road network and a pedestrian network 102. The road network 102 provides a series of connected road segments and intersections; the pedestrian network comprises sidewalks and pedestrian paths. Furthermore, the region 100 includes a public transit network and bicycle path network.

Figure 1 illustrates an embodiment of a system for providing advertising messages. The system includes an advertising provider 110, a network 120, and a mobile device 130. The mobile device 130 may be a cellular telephone, a mobile phone, a smart phone, a personal digital assistant ("PDA"), a tablet computer, a laptop, a personal navigation device ("PND"), a portable navigation device, a navigation system built into a vehicle and/or any other electronic device. The mobile device 130 may be associated with vehicles 132 that travel on the road network 102 in the region 100. The vehicles 132 may include a variety of cars, trucks, and motorcycles. The mobile device 130 may also be carried by a pedestrian or person traveling on public transit, bicycle or other mode of transportation.

The mobile device 130 includes suitable equipment that enables them to receive the advertising messages sent by the advertising provider 110. The advertising provider 110 transmits data indicating advertisements for points of interests, such as businesses and facilities including retail stores, restaurants, entertainment facilities, and so on, located in the region 100 or for services that are available in the region 100, sometimes referred to as advertising messages ("advertising messages" herein after). The mobile devices 130 that receive the advertising messages may include various different computing platforms.

The advertising provider 110 includes at least a server 112, a geographic database 114, an advertisement database 116 and a user information database 118. The network 120 and the communication paths between the advertising provider 110 and the network 120 may be any protocol or physical connection that is used to couple a server to a computer. The communication paths may utilize cellular, Ethernet, wireless, transmission control protocol (TCP), internet protocol (IP), or multiprotocol label switching (MPLS) technologies. In addition, the communication paths between the mobile device 130 and the network 120 may utilize cellular technologies including 3G, 4G, or WiMAX. As used herein, the phrases "in communication" and "couple" are defined to mean directly connected to or indirectly connected through one or more intermediate components. Such intermediate components may include both hardware and software based components.

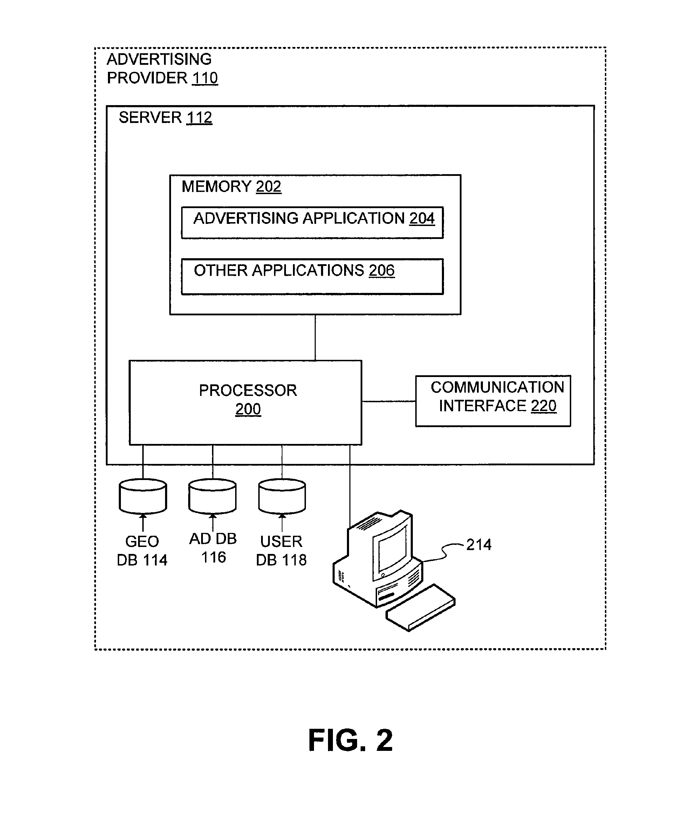

Figure 2 illustrates a more detailed view of the advertising provider 110 of the system for providing advertising messages. The advertising provider 110 creates, formats and distributes the advertising messages to a plurality of mobile devices 130. The advertising provider 110 includes equipment and programming for creating, formatting and transmitting the advertising messages. Included among the equipment and programming of the advertising system is an advertising server 112. The advertising server 112 includes appropriate computer hardware and software to run network applications. The advertising server 112 is maintained and operated by the advertising provider 110. The advertising server 112 includes a processor 200, memory 202 and a communication interface 220. Additional, different, or fewer components may be used for the advertising server 112.

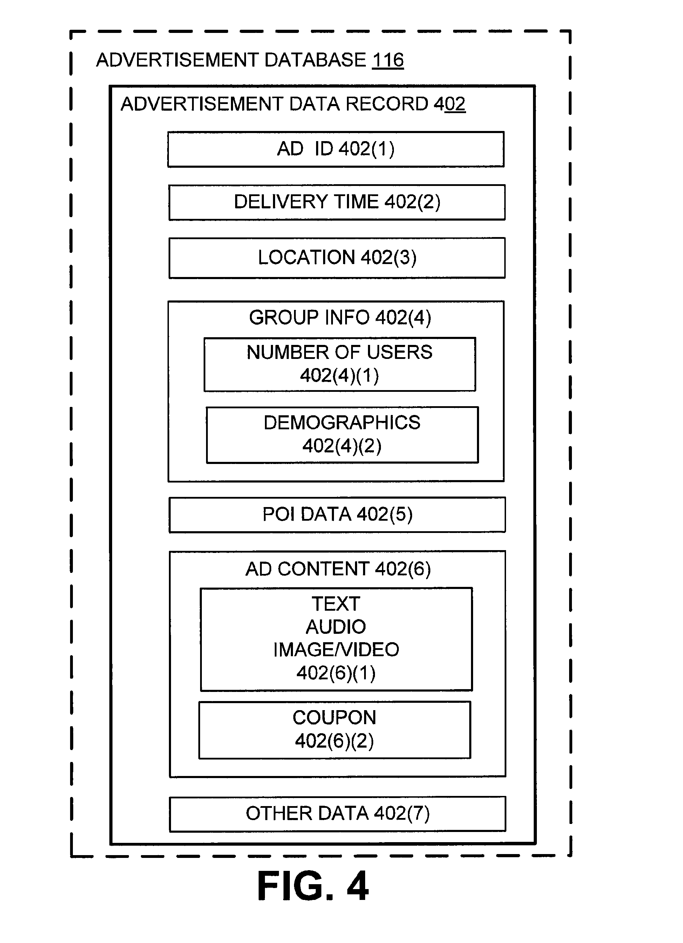

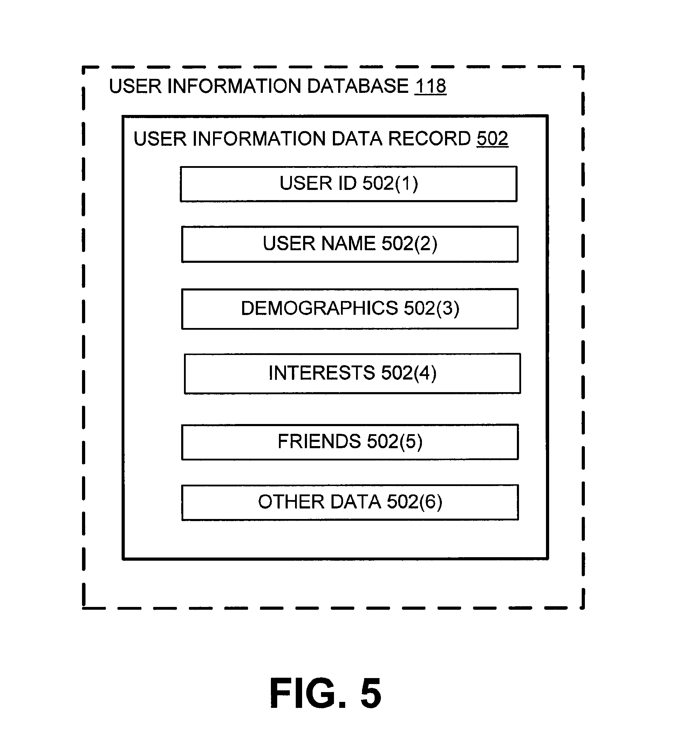

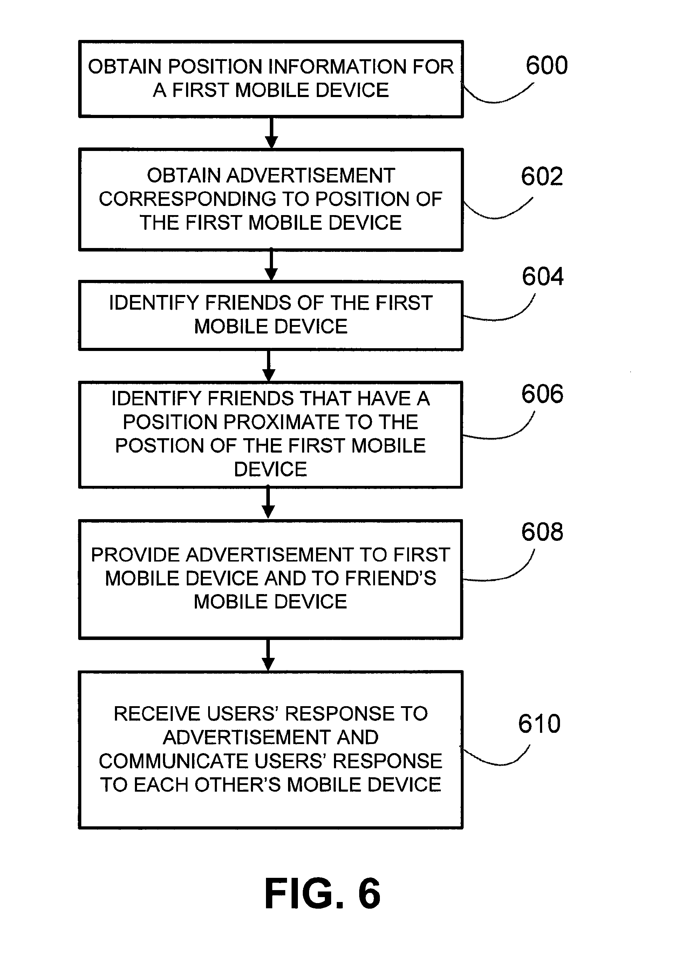

Referring to Figure 2, server applications are included on the advertising server 112. The server applications may be stored on memory comprising one or more hard drive(s) or other computer readable media operated by the server 112 and loaded into a memory 202 of the server 112 to be executed by the processor 200. One of the server applications is an advertising application 204. The advertising application 204 creates, formats and transmits the advertising message to the mobile device 130. The operation of the advertising application will be discussed in detail in conjunction with Figure 6 below. Also associated with the advertising server 112 are the geographic database, the advertisement database 116 and the user information database 118. The geographic database 114 includes geographic data representing a geographic region. The geographic data may include data representing the road network, pedestrian network, public transportation network and points of interest located in the geographic region. The advertisement database 116 includes data representing advertisements and data representing advertising campaigns. The advertisement database 116 is described in detail below in conjunction with Figure 4. The user information database 118 includes data representing the user of the mobile device 130; the user information database 118 is described in detail below in conjunction with Figure 5.

Referring to Figure 2, other server applications 206 may be provided. One example of another server application 206 is a navigation-related server application that may include separate applications (or subprograms) that provide these various navigation features and functions. These functions and features may include route calculation (wherein a route to a destination identified by the end-user is determined), route guidance (wherein detailed directions are provided for reaching a desired destination) and other navigation-related or map-related functions and programming, such as map display, positioning (i.e., map matching), local search, destination selection and so on. The advertising application 204 and the other applications 206 may be written in a suitable computer programming language such as C, although other programming languages, such as C++ or Java, are also suitable.

Referring to Figure 2, the advertising provider 110 also includes a workstation 214. A representative of the advertising provider 110 may use the workstation 214 to establish advertising campaigns and advertising content for the advertisements database 116. Additionally, the representative may be external to the advertising provider 110 and provide advertising campaigns and advertising content.

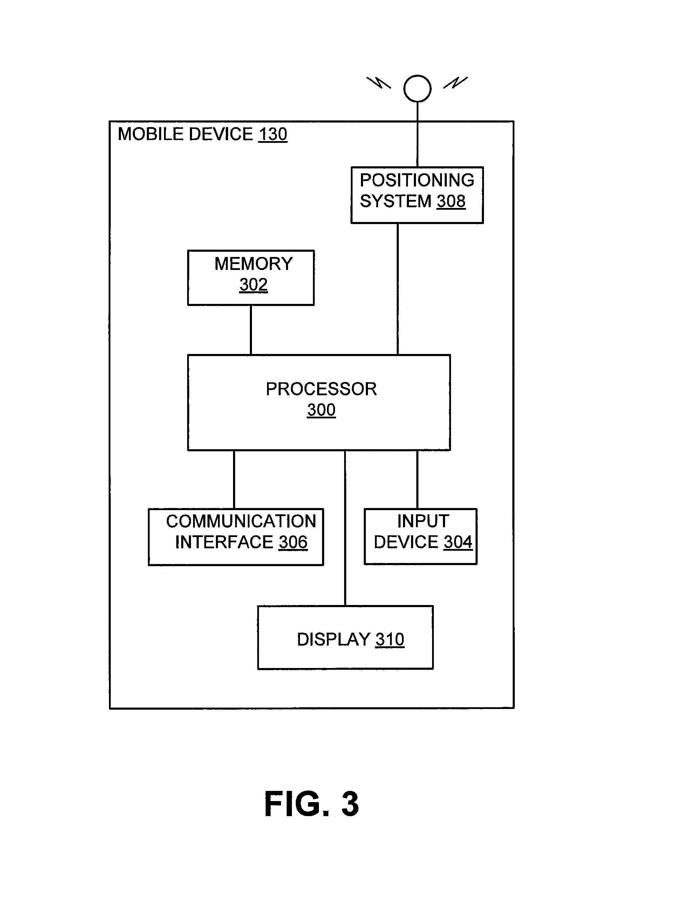

Figure 3 illustrates a more detailed view of the mobile device 130 of the system for providing advertising messages. The mobile device 130 includes a processor 300, a memory 302, an input device 304, a communication interface 306, a positioning system 308, and a display 310. The processor 300 may be any type of processor suitable for mobile devices and/or computers.

The memory 302 may be a volatile memory or a non-volatile memory. The memory 302 may include one or more of a read only memory (ROM), random access memory (RAM), a flash memory, an electronic erasable program read only memory (EEPROM), or other type of memory. The memory 302 may include an optical, magnetic (hard drive) or any other form of data storage device. The memory 302 may be removable from the mobile device 130, such as a secure digital (SD) memory card.

The input device 304 may be one or more buttons, keypad, keyboard, mouse, stylist pen, trackball, rocker switch, touch pad, voice recognition circuit, or other device or component for inputting data to the mobile device 130. The input device 304 and the display 310 may be combined as a touch screen, which may be capacitive or resistive. The display 310 may be a liquid crystal display (LCD) panel, light emitting diode (LED) screen, thin film transistor screen, or another type of display.

The communication interface 306 may include any operable connection. An operable connection may be one in which signals, physical communications, and/or logical communications may be sent and/or received. An operable connection may include a physical interface, an electrical interface, and/or a data interface. An operable connection may include differing combinations of interfaces and/or connections sufficient to allow operable control. For example, two entities can be operably connected to communicate signals to each other directly or through one or more intermediate entities (e.g., processor, operating system, logic, software). Logical and/or physical communication channels may be used to create an operable connection. For example, the communication interface 306 may include an output communication interface devoted to sending signals, data, packets, or datagrams and an input communication interface devoted to receiving signals, data, packets, or datagrams. The communication interface 306 provides for wireless and/or wired communications in any now known or later developed format.

The positioning system 308 includes a global positioning system (GPS), cellular, or similar position sensor for providing location data. The positioning system 308 may utilize GPS-type technology, a dead reckoning-type system, or combinations of these or other systems. The positioning system 308 may include suitable sensing devices that measure the traveling distance, speed, direction, and so on, of the device 130. The positioning system 308 may also include appropriate technology to obtain a GPS signal.

In another embodiment, the mobile device 130 may include a geographic database and navigation-related and map-related application software program(s) that provide these various navigation and map features and functions, such as route calculation, route guidance, map display, positioning, local search, destination selection and so on. Additionally, the mobile device 130 may include social network applications. Furthermore, the mobile device 130 may include a list of contacts and/or friends of the user of the device 130 in memory 302. Moreover, the list of contacts and/or friends may be available through an application executed on the mobile device or accessed by the mobile device 130.

### II. Geographic, Advertisement and User Information Databases

The geographic database 114 includes geographic data representing features located in a geographic region. The geographic data may include data representing the road network 102 including road segment data and node data. The road segment data represent roads, and the node data represent the ends or intersections of the roads. The road segment data and the node data indicate the location of the roads and intersections as well as various attributes of the roads and intersections. Other formats than road segments and nodes may be used for the geographic data. The geographic data may also represent points of interests (POIs). The POIs may include gasoline stations, hotels, restaurants, museums, stadiums, offices, automobile dealerships, auto repair shops, buildings, stores, statues, monuments, or geographic landmarks. The data representing POIs indicate the location of the POI, including how to access the POI using the road network (or pedestrian network), and various features or attributes of the POI, including hours of operation, telephone number, types of products and services available at the POI, address, and so on. The geographic data may also represent pedestrian features including pedestrian paths, sidewalks, crosswalks, parks, plazas and so on. The geographic data may also represent public transit networks and bicycle networks. The geographic database 114 may be produced and/or maintained by a map developer, such as NAVTEQ North America, LLC located in Chicago, Illinois.

In order to provide advertising messages, the advertising provider 110 uses the advertisement database 116 that includes data representing advertisements and data representing advertising campaigns. Referring to Figure 4, the advertisement database 116 contains advertisement data records 402 that represent content and campaign information for the advertisements or advertising messages. The advertisement data 402 includes an advertisement ID 402(1) by which the advertisement data can be identified in the advertisement database 116. Each advertisement content data record 402 has associated with it information that provide information regarding the advertising campaign and the content for the advertisement message.

Referring to Figure 4, the advertisement data 402 includes data that indicate conditions on the delivery of the advertisement and that provide guidelines and information for the advertising campaign. In one embodiment, the advertisement data 402 provides how the advertisement will be targeted to mobile device 130. In one embodiment, the advertisement data 402 include data representing delivery time 402(2) or when the advertisement should be delivered, such as time of the day for delivery, between certain hours of the day, on certain days of the week, and so on.

The advertisement data 402 includes data representing locations 402(3) for delivery of the advertisement or where the mobile device is located to be targeted with the advertisement, such as to any mobile device 130 in the geographic region, to mobile devices located in a defined portion of the geographic region, such as within a region defined by a polygon or a circle centered on a defined point location, and so on. In one embodiment, the advertisement is targeted based on the mobile devices' real time or current locations. In another embodiment, the advertisement is targeted based on the mobile devices' expected future locations. The location data 402(3) may specify a geo-fenced area or a defined area, and the advertisement is to be sent to mobile devices 130 located within the geo-fenced area and not to the mobile devices located outside of the geo-fenced area.

The advertisement data 402 also includes data representing group information data 402(4) for targeted recipients for the advertisement. According to one embodiment, the advertisement is targeted to at least two mobile devices 130 with the intention that at least two users of their respective mobile devices 130 will act together in response to the promotion or offer of the advertisement. For example, the advertisement may be for a movie theater that would like to encourage two friends to go to the movies together and provides an offer with two discount movie tickets. The group information data 402(4) includes data 402(4)(1) indicating the number of users that are intended to be targeted with the advertisement. The group information data 402(4) also includes demographic data 402(4)(2) for targeted users. For example, the demographic data may indicate that the advertisement should be targeted to females between the ages of 30 to 40 years old. Additionally, the demographics data 402(4)(2) may include users with defined preferences, users that like to do specified activities, users with behavioral patterns, such as past transactions or interests in prior advertisements, and so on.

The advertisement data 402 includes POI data 402(5) that identifies the point of interest associated with the advertisement, such as an ID of a point of interest that identifies the point of interest represented in the geographic database 114. The point of interest associated with the advertisement is typically a business, such as a retail establishment, restaurant, service establishment and so on. The POI data 402(5) provides the location of the point of interest associated with the advertisement, such as an address, latitude and longitude position, or other location reference system. The POI data 402(5) may also provide further information regarding the point of interest, such as business hours, point of interest category, telephone number, website, and other details regarding the point of interest.

The advertisement data 402 also includes data representing content 402(6) for the advertising message, such as text, audio, images and video. In one embodiment, the advertisement database 116 includes more than a single advertisement content for each advertisement message. In another embodiment, the advertisement database 116 includes more than one version of advertisement content for the advertising message for a single point of interest or service. In one embodiment, the advertisement database 116 includes advertisement content for a single recipient and another version of the advertisement content for a group targeted advertisement. Referring to Figure 4, the content 402(6)(1) comprises text, audio, images and/or video and the content also includes a coupon 402(6)(2) or other incentive to encourage the advertising recipient(s) to visit the associated point of interest or request the associated service.

The advertisement data 402 includes other data 402(7). Other data 502(7) may indicate key words that would trigger the advertising message, such as a user requesting a restaurant. Additionally, the other data 402(7) may include pricing information for the advertisement.

In one embodiment, the advertisement database 116 is generated by representatives of the advertising provider 110 using the workstation 214. For example, representatives of the advertising provider 110 may communicate with business owners and advertising agencies to establish advertisement data records 502 including advertising campaigns and advertising content for the advertisements database 116. Additionally, the advertising provider 110 may have a web-based application to enable business owners and advertising agencies establish advertisement data records 402 including advertising campaigns and advertising content for the advertisements database 116. For example, the representative or business owner may submit one or more advertisement content versions, such as a coupon and a banner advertisement. The representative or business owner may define a geo-fence for the location to target the advertisement. The representative or business owner may specify how many friends should be included in the targeted group as well as interests of the group for the advertisement. The representative or business owner may further specify an amount of money to spend per week or month on serving the advertisement messages and well has how much to spend per advertisement message.

In order to provide advertising messages that are targeted to mobile devices 130 of specific users, the advertising provider 110 uses the user information database 118 that includes data representing information of users of mobile devices 130. Referring to Figure 5, the user information database 118 contains user information data records 502 that represent information and personal information of users of mobile devices 130. The user information data 502 includes a user ID 502(1) by which the user information data can be identified in the user information database 118. In one embodiment, the user ID is an identification corresponding to the mobile device 130. Each user information data record 502 has associated with it information that describes the user of the mobile device 130.

Referring to Figure 5, the user information data 502 includes data that indicate a user name 502(2). The user name may be a full name, including first and last name, a nickname or any other indication of the user of the mobile device 130. The user information data 502 includes data representing demographics 502(3) of the user of the mobile device. The demographic data 502(3) may indicate various demographic information including age, sex, family information, income, education level, employment status, and residential address. The demographic data 502(3) may also include information regarding the type of mobile device 130 owned by the user.

The user information data 502 includes data representing interests 502(4) of the user of the mobile device 130. For example, the interest data 502(4) indicates favorite entertainment and activities of the user of the mobile device 130. The interest data 502(4) may also indicate preferential information, such as preferred restaurant and retail franchises, of the user of the mobile device 130. Moreover, the interest data 502(4) may include behavioral patterns, such as past transactions or interests in prior advertisements, information regarding movement, trips and destinations visited by the user. For example, location data for the mobile device 130 may be analyzed over time to determine where and when the user travels.

The user information data further includes data indicating friends 502(5) of the user of the mobile device 130. Friends of the user may include family members, classmates, co-workers, business contacts, and generally people that the user of the mobile device spends time with and does activities with. For example, one user may have a group of twelve close friends that he or she regularly meets for social activities, including going to movies, restaurants, shops and so on. The friends data 502(5) may include user identification for each of the friends, such as user ID data 502(1), user name data 502(2), mobile device identification of the friend, telephone number of the friend, email address of the friend and any other information used to uniquely identify the friend. The friends data 502(5) may grouped into various categories of friends, such as close personal friends, business contacts, co-workers, romantic interests and so on. Additionally, the friends data 502(5) may further indicate the types of activities that the user does with each of the friends, such as go to movies, restaurants, business networking events and so on.

The user information data 502 also includes other data 502(6). The other data 502(6) may include other details regarding the user of the mobile device 130. For example, the other data may include information regarding services subscribed to by the user, applications used by the user, billing information, credit card information, historical activities of the user, such as amount of time viewing different webpages and amount of time talking on the telephone to various people. The other data 502(6) may also include other information about the user of the mobile device.

### III. Group Location Based Advertising

As discussed above in conjunction with Figure 2, the advertising provider 110 includes the advertising program 204 that provides advertisement messages for various mobile devices 130. In one embodiment, the advertising program 204 provides group location based advertisements to mobile devices 130. People like to go to restaurants, pubs, movies, sporting events and concerts with other people, especially their friends. Group location based advertising is direct to provide location based advertisements to groups of people, such as two or more friends, to encourage then to go to a restaurant or an event together. For example, the advertising provider 110 has identified Bob and Jerry as friends. The advertising server 112 regularly obtains the current positions of the mobile devices 130 carried by Bob and Jerry. When the two friends are located proximate to each other and to Al's Pub, the advertising server 112 sends both friends an advertisement to meet at Al's Pub. For example, the advertising message sent to Bob's mobile device is "Meet Jerry at Al's Pub for twenty-five cent wings," and the advertising message sent to Jerry's mobile device is "Meet Bob at Al's Pub for twenty-five cent wings." After viewing the advertisements on the display of their respective mobile devices, Bob and Jerry may then accept or decline the offer of the advertisement with their respective responses being forwarded to each other's mobile device.

In addition to using the current position as a trigger for the group location based advertisement, the advertising server 112 may use information indicating a likely future position. For example, the advertising server 112 learns that Bob will be in Wichita on Tuesday. The advertising server 112 obtains data indicating that Bob's friend Joe lives in Wichita. The advertising server 112 also obtains data indicating that both Bob and Joe enjoy seafood and then sends an advertisement to the mobile devices of Bob and Joe encouraging them to eat at Dave's seafood restaurant together on Tuesday evening in Wichita. Moreover, the advertising server may use historic information and real-time information to generate group location base advertisements. For example, historic position information shows that on Wednesday evenings both Bob and Kyle go to gyms in the same neighborhood; user interest information indicates that both Bob and Kyle are fans of the local basketball team; and real-time event information indicates that the playoff game for the local basketball team has just started. The advertising server 112 using this information sends an advertisement to Bob and Kyle encouraging them to visit a sports bar after the gym and watch the game together.

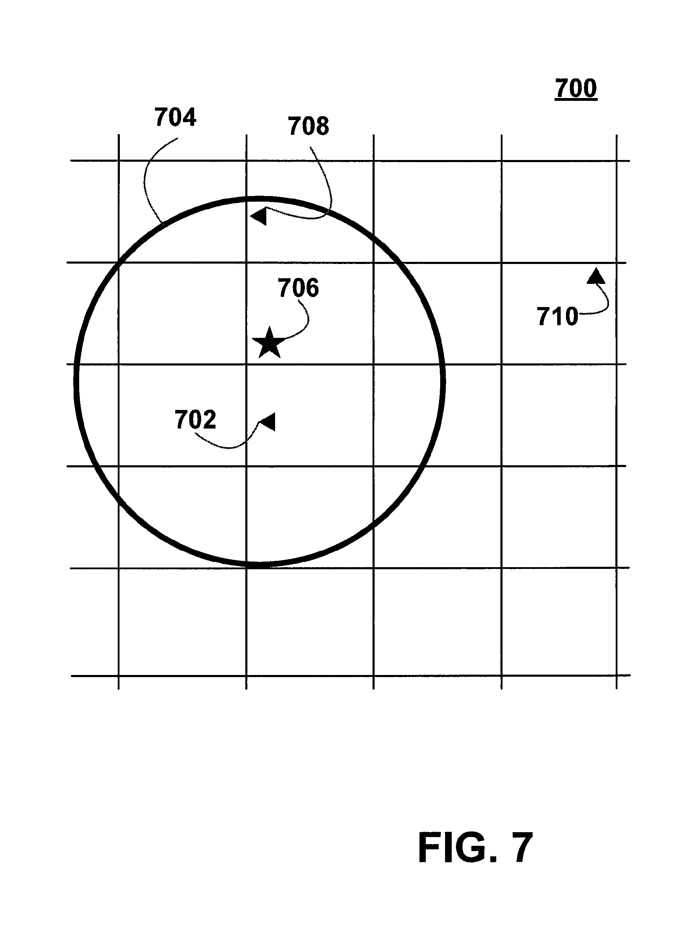

Figure 6 illustrates a flow chart of the steps for providing a group location based advertisement according to an example embodiment. Figure 7 illustrates a map of a geographic region 700 that will be used to illustrate the steps discussed in conjunction with Figure 6. At step 600, the advertising program 204 obtains position information of a first mobile device 702. In one embodiment, the server periodically obtains the current position of the first mobile device 702 of a first user with a user name of Moe. The positioning system 308 determines the location, direction, orientation and/or speed of the mobile device 702. The current position may be provided to the server 112 in terms of latitude and longitude coordinates. In one embodiment, the mobile device 702 runs an application that requests an advertisement from the server 112 and includes an identification of the mobile device 702 as well as the current position information and/or demographics, interest and preference information with the request to the server 112. Using the current position information, the advertising program 204 may identify on which road segment or pedestrian segment that the mobile device 702 is currently traveling on by map matching.

In another embodiment, the position information of the first mobile device 702 is a likely future position. For example, the advertising program 204 obtains position information indicating travel plans to another city on a future date, and the destination of the travel plans is used as the position of the mobile device 702. In a further embodiment, the position may be determined by analyzing historic position data. The position data for the mobile device from many weeks may be analyzed to determine a pattern of travel and locations regularly visited. For example, by analyzing past position data, the advertising program may determine that the mobile device visits neighborhood X every Thursday from 7 pm to 10 pm.

At step 602, the advertising program 204 obtains an advertisement corresponding to the position of the first mobile device 702. The advertisement is obtained from the advertisement database 116. In one embodiment, the advertisement program 204 identifies the advertisement based on the position of the first mobile device 702. The advertising program 204 accesses the advertisement database 116 to identify one of the advertisement data records 402 whose location data 402(3) matches the position of the first mobile device 702. For example, the location data 402(3) may specify a geo-fence 704 or geographic region around the location of a point of interest 706 associated with the advertisement, and the position of the first mobile device 702 is located with the geo-fence 704. In other embodiments, the advertisement selected may be solely based upon demographics, preferences, interests and behavior patterns of the user of the first mobile device 702 or based upon a combination of location and demographics, preferences, interests and behavior patterns of the user of the first mobile device 702. The advertising program 204 may obtain demographics data 502(3) and interest data 502(4) from the user information data record 502 of the user of the first mobile device and obtain delivery time data 402(2) and demographics data 402(4)(2) from the advertisement database 116 to select the advertisement.

The advertisement has an associated incentive to visit the point of interest 706. For example, the incentive is a coupon, a promotion with discount on purchase, a limited time offer for a product or service offered by the point of interest 706. The incentive to visit the point of interest is designed to encourage the users of the mobile devices to travel to the point of interest and use the coupon or take advantage of the promotion or offer to obtain the product or the service from the point of interest 706. The advertising program 204 obtains the coupon data 402(6)(2) from the advertising database 116.

At step 604, the advertising program 204 identifies at least one friend of the first user of the first mobile device 702. At least one friend of the first user of the first mobile device 702 is a user of another mobile device. In one embodiment, the advertising program 204 obtains friends data 502(5) from a user information data record corresponding to the first user of the first mobile device 702. In another embodiment, the advertising program 204 obtains a listing of friends and their respective contact information including identification of their respective mobile devices from a social network type application or a contacts list. In another embodiment, the advertising program 204 selects the mobile devices of users that may be potential friends and potentially completely unknown to the first user. Potential friends would be users that have similar interests and/or demographic information as the first user. For this embodiment, the advertising program 204 obtains user interest data 502(4) and or user demographic data 502(3) for plurality of mobile devices located in the general area of the first mobile device, such as within 2 miles of the location of the first mobile device, and identifies those users having matching interests and/or preferences and/or similar demographics, such as age.

At step 606, the advertising program 204 identifies the friends identified in step 604 that have a position proximate to the position of the first mobile device 702. In an alternative embodiment, the advertising program 204 identifies the friends identified in step 604 that are located proximate to the point of interest 706. To perform this step, the advertising program 204 obtains position information of a mobile device used by each of the identified friends or potential friends of the first user of the first mobile device 702. For illustration, a second mobile device 708 of a second user with a user name Larry and a third mobile device 710 of a third user with a user name Curly belong to friends of the Moe, the user of the first mobile device 702. In one embodiment, the server obtains the current position of the friends' mobile devices (second mobile device 708 and the third mobile device 710). In other embodiments, the position information of the second and third mobile device 708 and 710 is a likely future position or a position may be determined by analyzing historic position data.

Using the position information of the friends' mobile devices, the advertising program 204 identities those friends located proximate to the position of the first mobile device, such as within a predetermined distance from the location of the first mobile device. In one embodiment, the advertising program 204 determines whether any of the friends' mobile devices have a position that matches the location data 402(3) of the advertisement. For the example shown in Figure 7, the location data 402(3) specifies a geo-fence 704 around the location of the point of interest 706 associated with the advertisement. Larry and his second mobile device 708 is located within the geo-fence 704, while Curly and his third mobile device 710 is located outside of the geo-fence 704. In other embodiments, the advertising program identifies the friends' devices that are within a predetermined distance from the first mobile device or the point of interest associated with the advertisement. Additionally, if the location for the advertisement is within a specified city, the advertising program identifies the friends' mobile device located within that city.

If no friends are located proximate the first mobile device or within the geo-fence 704 of the advertisement, the advertising program 204 may select a version of advertisement content for the point of interest from the advertisement data record 502 that does not include the incentive for a group to visit the point of interest, such as a version of advertisement content of a banner advertisement. In another embodiment, advertising program 204 may return to step 602 and select a different advertisement data record 402 with a different point of interest.

At step 608, the advertising program 204 provides the advertisement to the first mobile device 702 and the friends' mobile devices identified in step 606. In one embodiment, the advertisement message and content is customized to encourage group behavior using the user information data 502 of the users. For example, the advertisement message may incorporate the user name data 502(2) of the users of the mobile devices and the advertising incentive may be tailored to the users considering demographic data 502(3) and interest data 502(4). For example, the advertisement message sent to the first mobile device 702 is "Meet Larry for coffee at The Café and get two for one iced coffees?" The advertisement message sent to the second mobile device 708 is "Meet Moe for coffee at The Café and get two for one iced coffees?" This example includes the incentive to visit the point of interest offering two for one priced iced coffees which are liked by both Moe and Larry. In one embodiment, the incentive or coupon is only valid and redeemable by both of the recipients together at the point of interest. In an alternative embodiment, the incentive or coupon must be redeemed by a specified number of individuals, but the group only needs to include one of the recipients.

The customized advertisement messages are provided to the mobile devices. For example, if the advertising content selected in step 608 includes a coupon, the advertisement message provided to the mobile devices includes the coupon. The advertisement message is transmitted to the mobile device 130 from the server 112 over the network 140. Once the mobile device 702, 708 receives the advertisement message, the advertisement message is provided to the user via the display 310 and/or other user interface of the mobile device. In one embodiment, the advertisement message is stored in memory 302 of the mobile device, and an application running on the mobile device 130 provides the advertisement to the end user of the mobile device. The end user views and interacts with the advertisement message via the display and user interface of the mobile device. For example, the end user may click to a landing page associated with the advertisement message, click to the coupon provided by the advertisement message, click to obtain a map displaying the point of interest associated with the advertisement message, click to call the point of interest associated with the advertisement message, click for directions to the point of interest associated with the advertisement message and/or click to obtain a website of the point of interest associated with the advertisement message.

In one embodiment, after the advertising message is displayed to the user, the user is provided with response options and selects one of the response options. The user selected response option is communicated to the server 112. The response options include 1) accept the advertisement offer and indicate desire to visit the point of interest and meet your friend and 2) decline the advertisement offer. In alternative embodiments, additional response options include 3) accept advertisement offer but decline visit with indicated friend and will visit with a different friend, 4) decline for now, but ask me again later, or 5) decline offer and request different offer for visit to same point of interest without friend(s). If the user selects the accept option, the user may also specify a desired arrival time at the point of interest.

At step 610, the advertising server 112 receives the user selected response from the devices 702 and 708 that were provided the advertising message. The advertising program 204 evaluates the each of the user selected responses, formats a message for the other user incorporating the friend's response and communicates the messages to each other's mobile device. For example, Moe, the user of the first mobile device 702, accepts the advertisement offer. The advertising program 204 formats and communicates a message for the user, Larry, of the second mobile device 708 of "Moe wants to meet you for coffee at The Café." Additionally, Larry, the user of the second mobile device 708, accepts the advertisement offer. The advertising program 204 formats and communicates a message for the user, Moe, of the first mobile device 702 of "Larry wants to meet you for coffee at The Café." Moreover, if Moe declines the offer while Larry accepts, Moe receives no further communications regarding the offer while Larry receives a message indicating that Moe is not available; in one embodiment, Larry receives the indication that Moe is not available and another offer that may be used by Larry alone without Moe.

The messages communicating the users' response to the advertisement are provided to the mobile devices and provided to the user via the display 310 and/or other user interface of the mobile device 130. In one embodiment, the mobile device 130 may request additional information from the server 112, such as directions to the point of interest. Additionally, the server 112 may track the position of the mobile devices to determine that the devices visit the point of interest and or redeem the offer of the advertisement message. Moreover, the advertising program 204 tracks the user response to the advertisements as well as whether the incentive or coupon is redeemed.

In alternative embodiments, the steps shown in Figure 6 may be performed in a different order by the advertising program 204. In one embodiment, the advertising program 204 may first obtain the advertisement from the advertisement database 116 without using the position information of the mobile devices. For example, the advertising provider 110 conducts an advertising campaign for a concert venue. The advertising program obtains and evaluates the location data 402(3) and group data 402(4) of the advertisement for the concert venue. For example, the locations targeted by the advertisement are an area surrounding the concert venue with a radius of three miles. Additionally, the advertisement targets users of mobile devices that are punk rock fans. The advertising program 206 then identifies mobile devices that are located within the geo-fence area of the selected advertisement. Thereafter, the advertising program obtains and evaluates the demographics data 502(4) and interest data 502(5) of those identified mobile devices to identify those that are punk rock fans. In this example, if at least two of the mobile devices are friends, those two mobile devices will receive the group location-based advertisement message. However, if no friends are located within the area around the concert venue, the advertising program 204 may identify potential friends using the demographics data 502(3) and interest data 502(4) and send the group location based advertisement message to the potential friends.

In another embodiment, steps 600, 604 and 606 of Figure 6 are performed before step 602. In this embodiment, the position of the first mobile device and friends of the first mobile device located proximate to the first mobile device are determined before obtaining the advertisement. The demographics data 502(3), interest data 502(4) and type of friends data 502(5) of the first user and his or her friends is used to best select one of the advertisements having location data. For example, Joe and Moe are located close to each other, Joe and Moe are co-workers and Joe and Moe like sushi. The advertising program using the position and user information for Joe and Moe selects and sends a group location based advertisement for lunch at a sushi restaurant near their office.

It is intended that the foregoing detailed description be regarded as illustrative rather than limiting and that it is understood that the following claims including all equivalents are intended to define the scope of the invention. The claims should not be read as limited to the described order or elements unless stated to that effect. Therefore, all embodiments that come within the scope and spirit of the following claims and equivalents thereto are claimed as the invention.

## Claims

1. A computer implemented method of providing advertisements, the method comprising:
obtaining a position of a first mobile device;
identifying one of the advertisements from an advertisement database based on the position of the first mobile device;
identifying at least one friend of a first user of the first mobile device, wherein the friend is associated with a second mobile device;
obtaining a position of the second mobile device, wherein the position of the second mobile device is proximate the position of the first mobile device;
providing the identified advertisement to the first mobile device and the second mobile device, wherein the advertisement includes an incentive for both a first user of the first mobile device and a user of the second mobile device to visit together a point of interest associated with the identified advertisement.

2. The method of Claim 1 wherein the incentive is a coupon.

3. The method of Claim 1 wherein the friend of the first user is obtained from user information.

4. The method of Claim 1 wherein the friend of the first user is obtained from a contacts list associated with the first mobile device.

5. The method of Claim 1 wherein the friend of the first user is obtained using interest information of the first user.

6. The method of Claim 1 further comprising:
obtaining a response from the first mobile device representing acceptance or denial of the advertisement.

7. The method of Claim 6 further comprising:
providing the response from the first mobile device to the second mobile device.

8. A system for providing an advertisement comprising:
a processor,
an advertisement database associated with the processor, and
an advertising program executed on the processor, wherein the advertising program obtains a position of a first mobile device, identifies a second mobile device of a friend of the first mobile device that is located proximate the position of the first mobile device and provides an advertisement from the advertisement database to the first mobile device and the second mobile device, wherein the advertisement includes an incentive for both a first user of the first mobile device and a second user of the second mobile device to visit together a point of interest associated with the advertisement.

9. The system of Claim 8 wherein the advertising program obtains demographics information of the first user and the user of the second mobile device.

10. The system of Claim 8 wherein the advertising program obtains interest information of the first user and the user of the second mobile device.

11. The system of Claim 8 wherein the user of the second mobile device is a friend of the first user.

12. The system of Claim 8 wherein the user of the second mobile device has similar interests as the first user.

13. The system of Claim 8 wherein the incentive is a coupon.

14. The system of Claim 8 wherein the advertising program obtains a response from the first mobile device representing acceptance or denial of the advertisement and provides the response to the second mobile device.
